# EUROPEAN PATENT APPLICATION

(11) **EP 4 538 850 A1**
(43) Date of publication of application: **16.04.2025**
(21) Application number: 24205726.3
(22) Date of filing: 10.10.2024
(51) Int. Cl.: G06F 3/12, H04N 1/00

(54) **METHOD FOR CONTROLLING INFORMATION PROCESSING APPARATUS, INFORMATION PROCESSING APPARATUS, AND STORAGE MEDIUM**

(30) Priority: 10.10.2023 JP 2023174944
(71) Applicant: CANON KABUSHIKI KAISHA, Tokyo 146-8501 (JP)
(72) Inventor: HIDAKA, Daichi, Tokyo, 146-8501 (JP)
(74) Representative: Canon Europe Limited

(57) **Abstract**

According to an aspect of an application of the present invention, an information processing apparatus acquires first language information, second language information, and first replacement information corresponding to the first language information and including information about a term to be displayed on a print setting screen, determines whether the acquired first language information and the acquired second language information match, and processes the first replacement information, and in a case where the information processing apparatus determines that the first language information and the second language information differ from each other, information processing apparatus processes the first replacement information into second replacement information corresponding to the second language information.

## Description

### BACKGROUND OF THE INVENTION

### Field of the Invention

The present invention relates to a method for controlling an information processing apparatus, an information processing apparatus, and a storage medium.

### Description of the Related Art

A configuration is known that issues print instructions to a printing apparatus connected to a host computer using a printer driver installed as software for controlling the printing apparatus in the host computer. An operating system (OS) is installed in the host computer, and the printer driver is configured based on specifications defined by the OS and is executed by the OS. The vendor of the printing apparatus provides a printer driver compatible with the OS specifications to provide a means of instructing the printing apparatus to print using the OS.

In recent years, an example of a standard class driver (hereinafter, also referred to as "standard driver") that can be used commonly by printing apparatuses provided by a plurality of vendors is provided by Windows^{®}. The standard driver is included in the OS package and becomes easily usable by simply connecting a printing apparatus to a host computer. This makes it unnecessary to install a model-specific printer driver for the printing apparatus separately, so that it is highly convenient.

Further, the standard driver is configured to designate printing functions based on Print Device Capabilities (hereinafter, "PDC") generated based on information acquired from a connected printing apparatus. This enables a user of the standard driver to designate printing functions based on the capabilities of the connected printing apparatus although only one standard driver is used.

Furthermore, the standard driver generates Print Device Resources (hereinafter, "PDR"). PDR refers to replacement information for replacing a text string representing a printing function or a setting value described in a PDC with a term to be displayed on a print setting screen, and a PDR is generated for each of the language packages installed in the OS. On a print screen provided by the standard driver or the OS, each text string representing the printing function or the setting value is replaced based on the content of the PDR corresponding to a specific language designated by the OS.

The standard driver can be associated with function extension applications (hereinafter, also referred to as "extension applications"). The extension applications can be provided by the vendor of the printing apparatus. By editing the PDC generated by the standard driver, the extension applications provide functions (extension functions) that cannot be realized by the standard driver alone. The PDC editing refers to rewriting existing printing functions in the PDC generated by the standard driver, deleting existing printing functions, or adding new printing functions.

Further, the extension application can also edit the PDR generated by the standard driver. By editing the PDR generated by the standard driver, the extension application configures desired terms to be displayed to refer to printing functions and setting values of the printing functions on a print setting screen provided by the standard driver or the OS. The PDR editing refers to rewriting existing replacement information in the PDR generated by the standard driver or adding new replacement information.

There is a known technology for extending functions of a standard driver using an extension application by performing PDC editing based on information acquired from a printer (refer to Japanese Patent Application Laid-Open No. 2021-108001).

The extension application discussed in Japanese Patent Application Laid-Open No. 2021-108001 edits a PDC based on information acquired from the printer that indicates printing functions to extend the functions of the standard driver (*i.e.,* adds printing functions specific to the printer) and displays a setting screen including setting values of the added printing functions. However, there is demand for improved convenience of the setting screen.

### SUMMARY OF THE INVENTION

According to a first aspect of the present invention, there is provided a method as specified in claims 1 to 7. According to a second aspect of the present invention, there is provided a non-transitory computer-readable storage medium as specified in claim 15. According to a third aspect of the present invention, there is provided an information processing apparatus as specified in claims 8 to 14.

Further features of the present invention will become apparent from the following description of embodiments with reference to the attached drawings.

### BRIEF DESCRIPTION OF THE DRAWINGS

Fig. 1 is a block diagram illustrating the hardware configuration of a print system.
Figs. 2A and 2B are diagrams illustrating a software configuration of the print system.
Fig. 3 is a diagram illustrating a process from editing Print Device Capabilities (PDC) to displaying a print setting screen.
Fig. 4 is a diagram illustrating an example of a response to a Get-Printer-Attributes from a printing apparatus.
Fig. 5 is a diagram illustrating an example of a PDC generated by print data generation software.
Fig. 6 is a diagram illustrating an example of a PDC edited by a printing function extension unit.
Figs. 7A and 7B are a diagram illustrating an example of a Print Capabilities (PC) generated based on the PDC by an operating system (OS).
Fig. 8 is a diagram illustrating an example of a Print Ticket (PT) generated based on the PC by the OS.
Fig. 9 is a diagram illustrating a process of displaying a print setting screen by a print setting screen extension unit.
Figs. 10A to 10C are diagrams illustrating an example of a print setting screen displayed by the print setting screen extension unit.
Figs. 11A and 11B are diagrams illustrating an example of the PDR generated by the print data generation software.
Fig. 12 is a diagram illustrating an example where differences arise in translated languages on a print setting screen displayed by the print setting screen extension unit.
Fig. 13 is a diagram illustrating a PDR editing process by the printing function extension unit.
Figs. 14A to 14C are diagrams illustrating an example of the PDR edited by the printing function extension unit.

### DESCRIPTION OF THE EMBODIMENTS

An embodiment of the present invention will be described in detail below with reference to the attached drawings. The following embodiment is not intended to limit the claimed invention, and not all combinations of the features according to the embodiment are used in the technical solution provided by the present invention.

Like numbers refer to like components, and redundant descriptions thereof will be omitted.

### <Hardware Configuration of Print System>

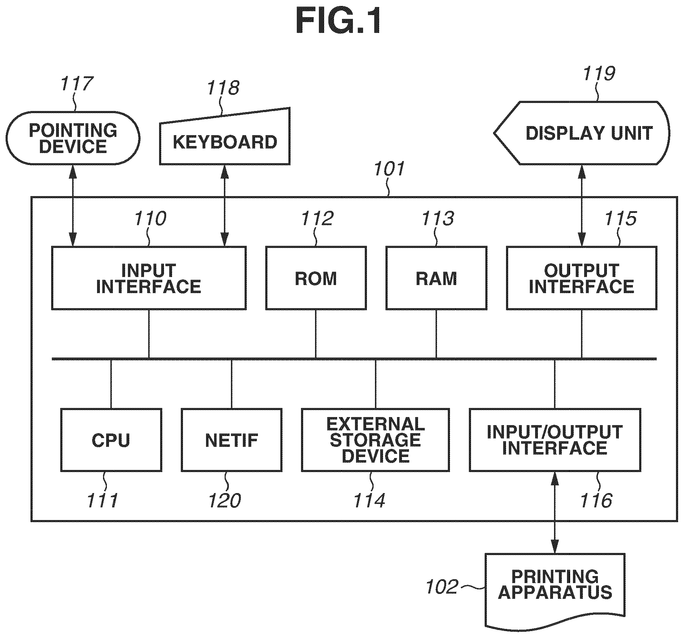

A first embodiment will be described. Fig. 1 is a block diagram illustrating the hardware configuration of a print system. In Fig. 1, a host computer 101 is an example of an information processing apparatus and includes an input interface 110, a central processing unit (CPU) 111, a read-only memory (ROM) 112, a random access memory (RAM) 113, an external storage device 114, an output interface 115, and an input/output interface 116.

Further, input devices, such as a keyboard 118 and a pointing device 117, are connected to the input interface 110, and display devices, such as a display unit 119, are connected to the output interface 115. A network interface (NETIF) 120 is a network interface that controls to perform data transfer with external devices via networks.

The ROM 112 stores initialization programs. The external storage device 114 stores an operating system (OS), application programs, such as print data generation software 202, and an extension application 204 and various other types of data. The external storage device 114 is an example of a storage unit. The RAM 113 is used as a work memory during the execution of various programs stored in the external storage device 114, and various programs can run on the host computer 101.

According to the present embodiment, the CPU 111 performs processes based on procedures of programs stored in the ROM 112 to perform functions of the host computer 101 and processes of flowcharts described below. A printing apparatus 102 is a device connected to the host computer 101 via the input/output interface 116. The host computer 101 and the printing apparatus 102 are separate from each other herein but can constitute a single information processing apparatus.

While an inkjet printer that prints by discharging ink onto sheets is described as an example of the printing apparatus 102, other methods (e.g., electrophotographic method) can be used to print. Further, the host computer 101 can be a desktop computer, a laptop computer, a smartphone, or a tablet.

A locally-connected inkjet printer will be described as an example of a type of the printing apparatus 102 according to the present embodiment. The printing apparatus 102 can be, for example, a laser beam printer (locally-connected and cloud-connected), but it is not limited to the foregoing two types, and a plurality of other device types and configurations for identifying connection forms can be employed.

The term "locally-connected" refers to a form where the host computer 101 and the printing apparatus 102 are connected to communicate directly with each other via the input/output interface 116 or the NETIF 120. The term "cloud-connected" refers to a connection form where the host computer 101 issues print instructions to the printing apparatus 102 via a cloud print service (not illustrated) on the Internet via the NETIF 120.

Unless otherwise specified, specific examples of attribute information (Features) indicating capabilities of the printing apparatus 102 and setting values (Options) in drawings described below as examples are examples of the printing apparatus 102 of the device type that is an inkjet printer.

### <Configuration of Print System Focused on Software>

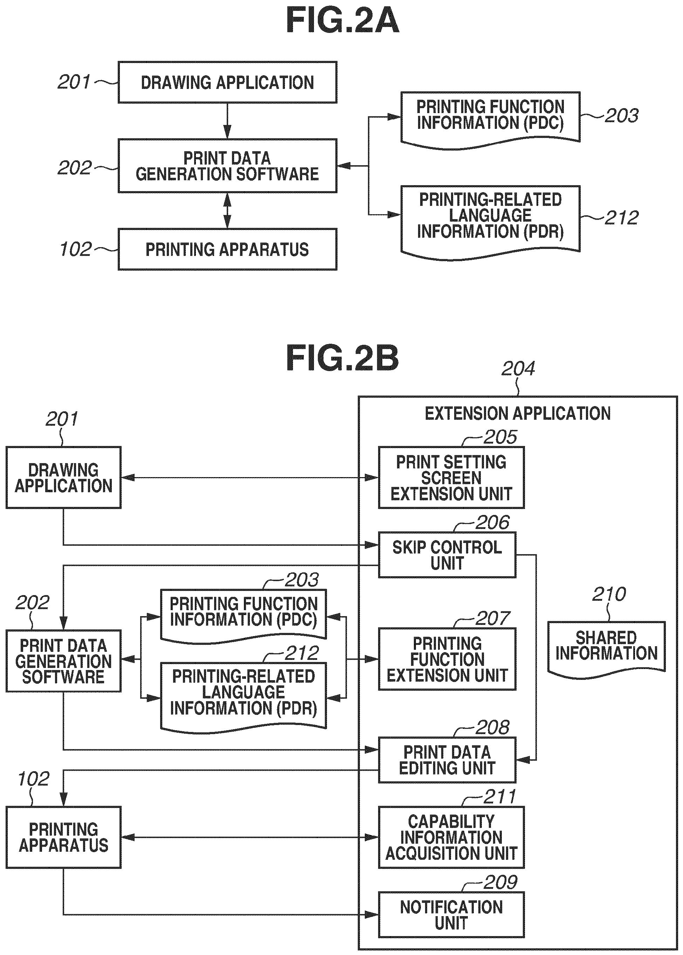

Figs. 2A and 2B are diagrams schematically illustrating software configurations of the print system. The print system described herein uses the host computer 101 equipped with Microsoft^{®} Windows^{®} 11 as the OS. A configuration that uses an Internet Print Protocol (IPP) class driver used in Windows^{®} 11 as the print data generation software 202 will be described. It will be appreciated that the present invention need not be limited to print systems using Microsoft^{®} Windows^{®} 11 as the OS, and the invention may be implemented using any other suitable OS.

The IPP class driver is a printer driver that performs printing processes based on the specifications of the standard print protocol referred to as IPP and is not included in the OS package. The IPP class driver is not a printer driver specific to the model of the printing apparatus 102 but a standard class driver that can be used commonly by a plurality of printing apparatuses of a plurality of printer vendors.

Fig. 2A is a diagram illustrating the general configuration of a case where the extension application 204 is not associated with the print data generation software 202 and the printing apparatus 102.

A drawing application 201 is software that generates content (drawing data) to print. Examples include word processing applications and spreadsheet applications. In a case where a print request is received from a user, the drawing application 201 issues a print instruction to the OS. The print instruction includes print setting information for instructing operations of the print data generation software 202 and the printing apparatus 102. The print setting information is also referred to as PrintTicket (hereinafter, "PT").

The drawing application 201 displays a print setting screen provided by the print data generation software 202, the OS, or the drawing application 201 to output the print setting information.

The print setting screen includes setting items (hereinafter, also referred to as "control items") indicating settable printing functions and control items indicating setting values of the setting items based on the capabilities information (information settable as print settings) acquired from the print data generation software 202.

The capability information is also referred to as Print Capabilities (hereinafter, "PC").

The print data generation software 202 determines the PC based on printing function information 203.

The printing function information 203 is data indicating printing functions and describing all settable printing functions, setting values of the printing functions, and mutually exclusive relationships between the setting values.

The printing function information 203 is also referred to as Print Device Capabilities (hereinafter, "PDC"). The PDC 203 is included in a configuration file of the print data generation software 202 and is generated dynamically by the print data generation software 202. Specifically, the print data generation software 202 or the OS can be configured to acquire attribute data on the printing apparatus 102 from the printing apparatus 102 and generate the PDC 203 based on attribute information in the acquired attribute data.

The attribute data on the printing apparatus 102 acquired from the printing apparatus 102 refers to a response acquired by issuing an IPP Get-Printer-Attributes operation to the printing apparatus 102. The response includes attribute information (Features) indicating the functions that can be designated in the printing apparatus 102 (capabilities of the printing apparatus 102) and setting values (Options) related to the attribute information. The response is stored in the RAM 113.

Further, the print data generation software 202 includes printing-related language information 212 as a configuration file. The printing-related language information 212 is information that is referenced to replace the wording of a specific Feature or Option with a term to be displayed on the print setting screen.

The printing-related language information 212 is also referred to as Print Device Resources (hereinafter, "PDR") and, like the PDC 203, the printing-related language information 212 is generated dynamically by the print data generation software 202. Specific Features or Options described in the PDR 212 and targets of replacement using the PDR 212 will be described below.

The foregoing configuration allows the print data generation software 202 to be configured so that for the printing apparatus 102 being connected, the user can designate printing functions that can be used in the printing apparatus 102. Specifically, the print data generation software 202 is configured so that even if printing apparatuses with different functions or printing apparatuses developed by different vendors are connected, the user can designate printing functions that can be used for each connected printing apparatus.

The OS generates intermediate data (also referred to as "input data") based on a print instruction output from the drawing application 201 and passes the intermediate data to the print data generation software 202. The data output for printing by the drawing application 201 is data in Graphics Device Interface (GDI) format (data in GDI format) or data in Extensible Markup Language (XML) Paper Specification (EXP) format (data in XPS format).

When the IPP class driver is used as the print data generation software 202 and the drawing application 201 outputs data in GDI format, the OS converts the data in GDI format into data in XPS format. Then, the converted data in XPS format is passed as intermediate data to the print data generation software 202.

If data output from the drawing application 201 is data in XPS format, the OS passes the data in XPS format as intermediate data to the print data generation software 202. The intermediate data includes drawing data and print setting information set by the user. The drawing data is information about images to be formed on paper.

The print data generation software 202 converts the acquired intermediate data into print data interpretable by the printing apparatus 102 and transmits the print data to the printing apparatus 102. The print data includes the drawing data, which is information about images to be formed on paper, and print setting attribute information (attribute information designating print settings) generated based on the print setting information set by the user. The print setting attribute information includes Features and Options.

The printing apparatus 102 performs printing on paper based on the print data transmitted from the print data generation software 202. At this time, the printing apparatus 102 forms the drawing data included in the print data on paper by performing operations based on the print setting attribute information included in the print data. The print setting attribute information includes print quality (such as image quality priority or speed priority) and attribute information for designating a two-sided printing and setting values of the attribute information. For example, when the print setting attribute information includes attribute information designating a two-sided printing and a setting value indicating that two-sided printing is to be operated, the printing apparatus 102 performs a two-sided printing.

Fig. 2B is a diagram illustrating a configuration with the extension application 204 associated with the print data generation software 202 and the printing apparatus 102. Configurations and processes that are not described below are similar to those in Fig. 2A.

The extension application 204 is software for extending the functions of the print data generation software 202 and is not pre-included in the OS (not included in the OS package). Thus, the user downloads the extension application 204 from a server via the Internet and installs the extension application 204 by operating the host computer 101.

Besides, the extension application 204 can be installed automatically with the printing apparatus 102 connected to the host computer 101. Specifically, with the printing apparatus 102 connected to the host computer 101, the OS acquires device identification information from the printing apparatus 102. The OS can download the extension application 204 corresponding to the acquired device identification information from a server via the Internet and install the extension application 204. Specifically, the print data generation software 202 and the extension application 204 are stored as separate files in the host computer 101.

The print data generation software 202 and the extension application 204 may be updated and upgraded, and this update and upgrade processes are performed at different timings. Specifically, the timing at which the host computer 101 acquires the print data generation software 202 and the timing at which the host computer 101 acquires the extension application 204 are different from each other. Further, a trigger for acquisition of the print data generation software 202 by the host computer 101 and a trigger for acquisition of the extension application 204 by the host computer 101 are also different from each other.

If the extension application 204 is installed, the OS associates the extension application 204 with the print data generation software 202 and the printing apparatus 102.

The extension application 204 according to the present embodiment includes a print setting screen extension unit 205, a skip control unit 206, a printing function extension unit 207, a print data editing unit 208, a notification unit 209, and a capability information acquisition unit 211.

Further, the extension application 204 includes shared information 210 commonly accessible by units. The actual form of the shared information 210 is a file saved on the external storage device 114 or information stored on the RAM 113. The extension application 204 writes and reads information to and from the shared information 210 using an application program interface (API) provided by the OS.

The extension application 204 can stop operating each time a process of a unit ends. In this case, the OS activates the extension application 204 each time a request to use a unit is received. In some embodiments, when a process of the print setting screen extension unit 205 ends, the OS ends the operation of the extension application 204, whereas when a process of the skip control unit 206 ends, the OS maintains the extension application 204 in the activated state.

Furthermore, the extension application 204 can cancel a process of a unit during the process. When a process is canceled, a job being processed on a print queue is deleted by the OS.

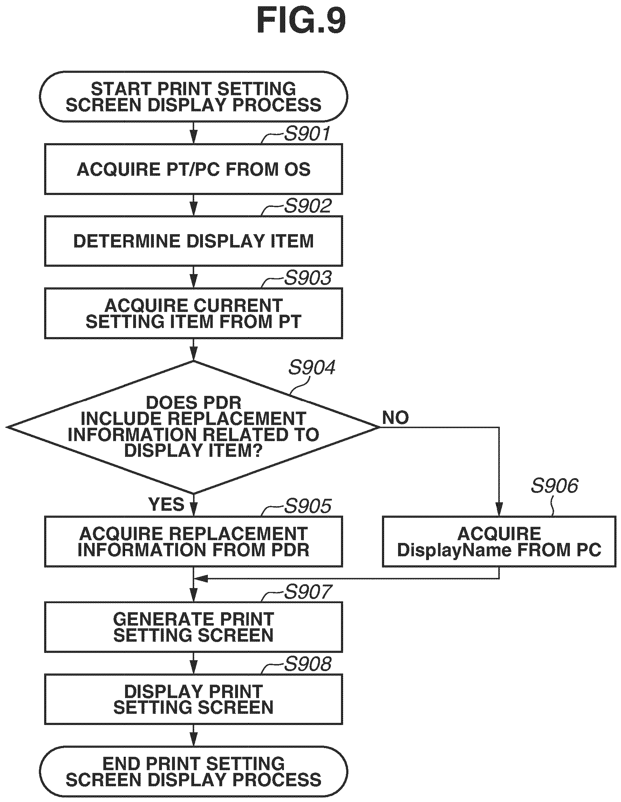

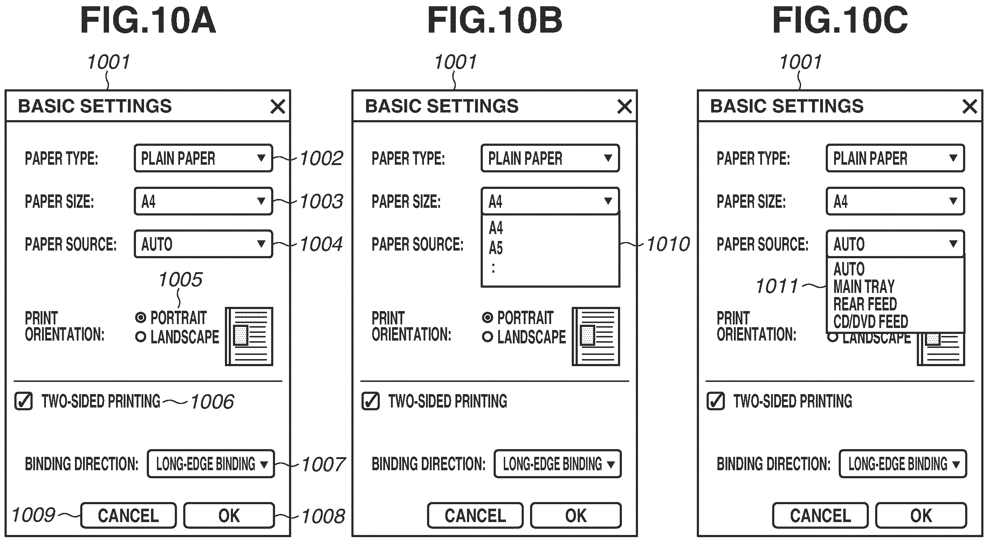

When a print request is received from the user, the drawing application 201 issues a print instruction to the OS. With this configuration, the drawing application 201 is also capable of displaying a print setting screen, as in the configuration in Fig. 2A. With the configuration, a print setting screen provided by the extension application 204 is displayed. Specifically, a print setting screen provided by the print setting screen extension unit 205 of the extension application 204 is displayed. Whether the print setting screen provided by the print setting screen extension unit 205 is displayed depends on a user operation. Details of the print setting screen extension unit 205 will be described below with reference to Figs. 9 and 10.

Further, when the drawing application 201 receives a print request from the user and issues a print instruction to the OS, the OS activates the skip control unit 206. The skip control unit 206 controls whether to skip a process of the print data generation software 202. After the skip control process of the skip control unit 206, the OS generates intermediate data based on the print instruction output from the drawing application 201, and the intermediate data is passed to the print data generation software 202.

At this time, if the skip control is not performed by the skip control unit 206, the print data generation software 202 processes the intermediate data into print data interpretable by the printing apparatus 102, and the print data is passed to the print data editing unit 208. On the other hand, when the print data generation software 202 is to be skipped, the intermediate data is passed to the print data editing unit 208 without being processed by the print data generation software 202. This makes it possible for the intermediate data to be processed by the print data editing unit 208.

The print data editing unit 208 performs editing on the intermediate data passed from the print data generation software 202 or the print data processed by the print data generation software 202. Regarding details of editing in, for example, layout printing, the print data editing unit 208 changes the layout of the intermediate data or the print data based on the print setting information about the layout printing that is received from the OS.

Further, the print data editing unit 208 is capable of displaying a user interface (UI) screen on the display unit 119 and is capable of providing a function of displaying the resulting layout of the intermediate data or the print data as a preview screen. While a graphical user interface (GUI) screen displayed on the display unit 119 by the print data editing unit 208 remains open, the print data transmission to the printing apparatus 102 can be disabled, and while the GUI screen is closed, the print data transmission can be performed.

After the print data editing unit 208 performs editing on the print data, the print data is passed to the printing apparatus 102. The printing apparatus 102 performs printing on paper based on the received print data.

If the print data generation software 202 is skipped by the skip control unit 206, the print data editing unit 208 can convert the received intermediate data into print data interpretable by the printing apparatus 102. Further, a function provided by the OS can be used to convert the intermediate data into print data.

The extension application 204 includes the printing function extension unit 207. The printing function extension unit 207 is capable of editing the PDC 203 and the PDR 212 generated by the print data generation software 202.

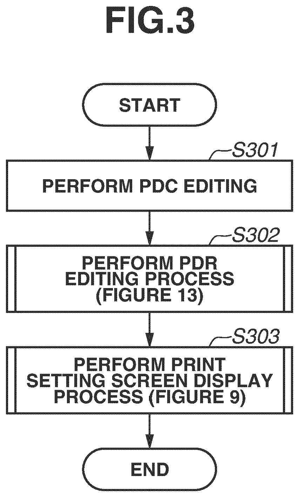

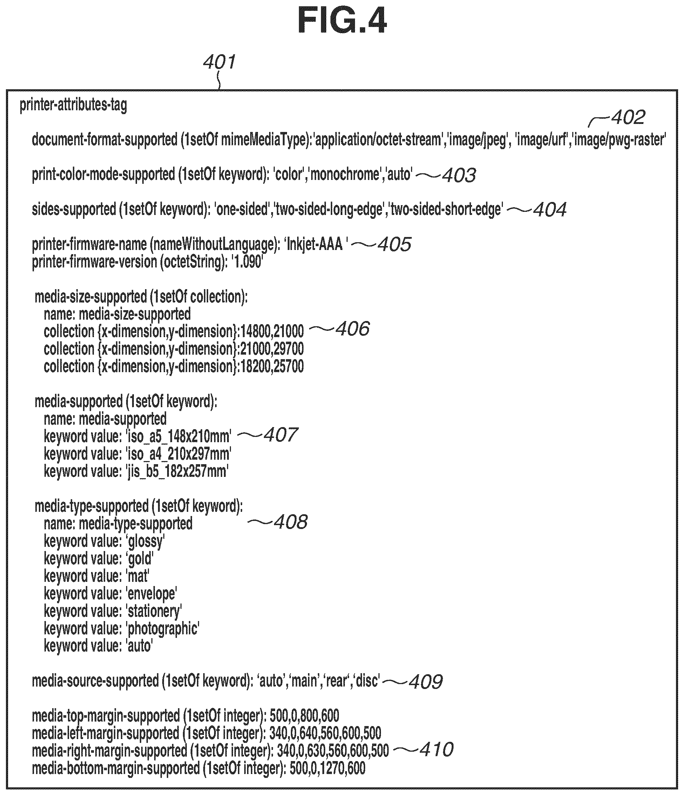

Fig. 3 illustrates a process from PDC editing to print setting screen displaying. The process flow illustrated in Fig. 3 is started when the OS issues a PDC editing request to the printing function extension unit 207. Details of the PDC editing (step S301) by the printing function extension unit 207 will be described below with reference to Figs. 4 to 6. By performing the PDC editing, the printing function extension unit 207 can add a function provided by the extension application 204 or a function that is supported by the printing apparatus 102, the latter function of which is not supported by the print data generation software 202.

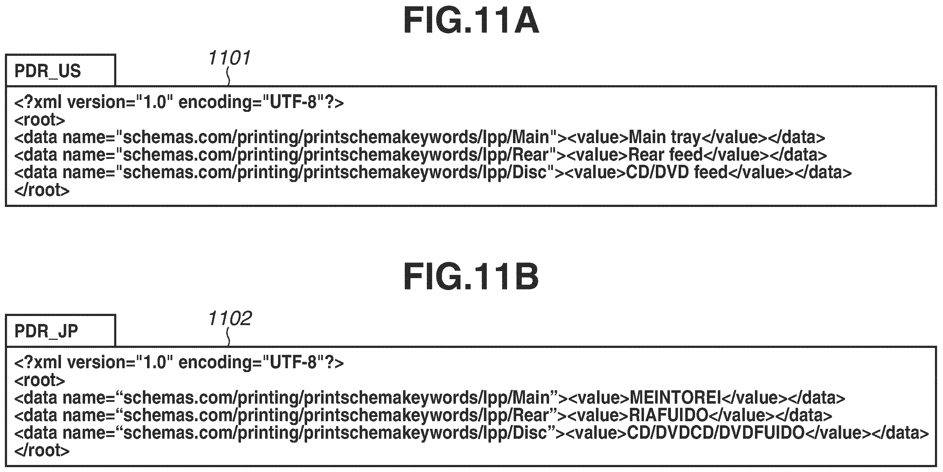

Further, details of the PDR editing (step S302) by the printing function extension unit 207 will be described below with reference to Figs. 11A, 11B, 13, and 14A to 14C. The PDR editing makes it possible to autonomously control the replacement of a text string representing a printing function added through the PDC editing to a term to be displayed on the print setting screen and also makes it possible to replace the term to be displayed on the print setting screen with a term specific to the printing apparatus 102.

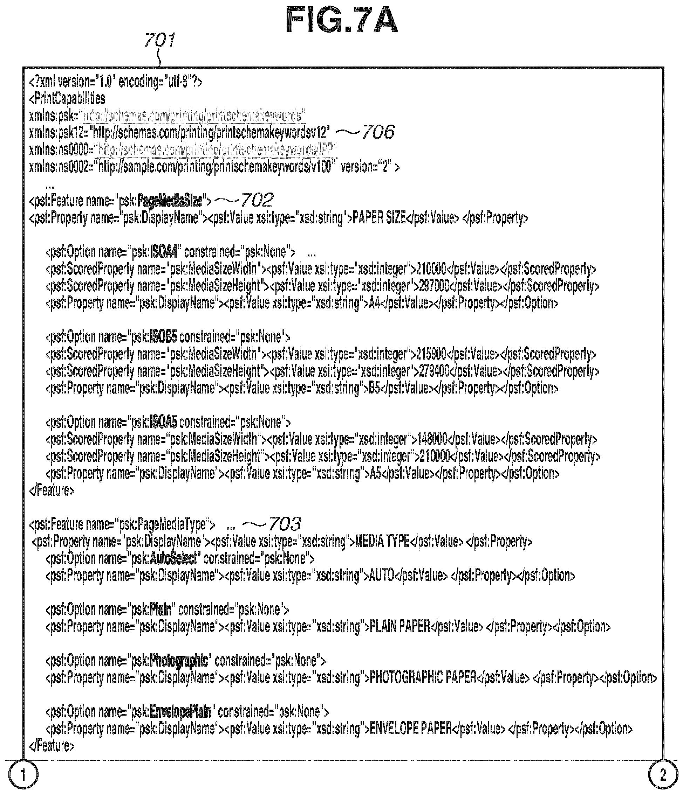

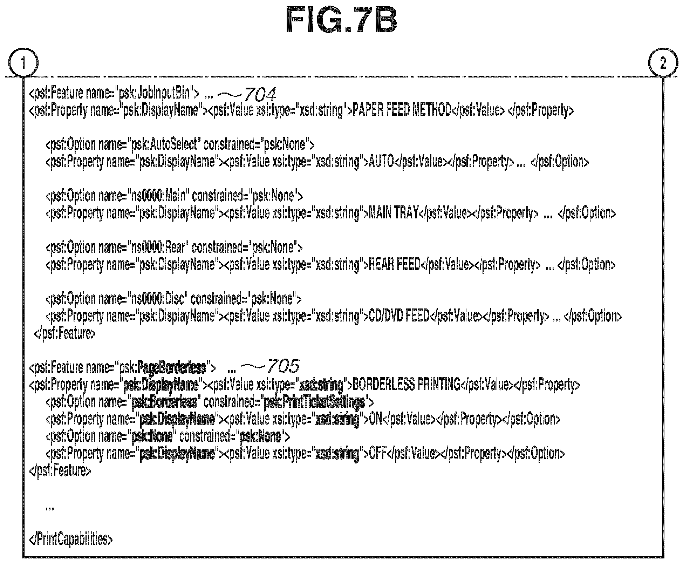

Details of a print setting screen display process (step S303) will be described below with reference to Figs. 7 to 10C.

The OS activates the printing function extension unit 207 when the extension application 204 is associated with the printing apparatus 102 and the print data generation software 202 for the first time. Furthermore, the OS can activate the printing function extension unit 207 when the OS is activated or at other timings.

The printing function extension unit 207 performs the foregoing process so that when an option apparatus (e.g., finisher) is added to the printing apparatus 102 afterward and a function related to printing is extended, the printing function extension unit 207 detects the extended function and adds the extended function to the PDC 203.

Further, describing replacement information about the added extension function in the PDR at the timing of adding the extended function to the PDC by the printing function extension unit 207 makes it possible to apply the replacement of the added function immediately.

Further, the extension application 204 includes the notification unit 209. The notification unit 209 is capable of displaying a notification to the user in response to an occurrence of an error in the printing apparatus 102.

For example, when an out-of-paper error occurs in the printing apparatus 102, the print data generation software 202 detects the out-of-paper error, and the OS displays a message on the display unit 119 using a notification function referred to as a toast notification. When the user presses the toast notification, the notification unit 209 of the extension application 204 is called by the OS, and a UI screen of the notification unit 209 is displayed. The UI screen of the notification unit 209 displays, for example, a message about details of the out-of-paper error and a paper loading method.

Further, the extension application 204 for implementing the present embodiment is not limited to the configuration including all the functions (units) described above and can include some of the functions or other functions. Further, the extension application 204 is sometimes referred to simply as print software.

### <Example of PDC Editing by Printing Function Extension Unit>

First, the print data generation software 202 acquires capability information about the printing apparatus 102 connected to the host computer 101 and generates the PDC 203 based on the acquired information. The capability information acquired from the printing apparatus 102 refers to information including setting information that can be set as print settings by the user in printing with the printing apparatus 102.

At the timing of associating the extension application 204 with a print queue of the printing apparatus 102, the OS activates the printing function extension unit 207 of the extension application 204 and issues a request to edit the PDC 203. The activation of the printing function extension unit 207 and the issuance of the request to edit the PDC 203 can be performed at a timing other than the timing of associating the extension application 204 for the first time, such as the timing of opening the print setting screen by the print setting screen extension unit 205.

When the PDC editing request is received from the OS, the printing function extension unit 207 acquires the PDC 203 generated by the print data generation software 202 and starts PDC editing.

Details of the PDC 203 generated by the print data generation software 202 will be described with reference to Fig. 4.

Information 401 is an example of a response acquired by issuing an IPP Get-Printer-Attributes operation to the printing apparatus 102. The information 401 includes attribute information (Features) indicating functions that can be designated as IPP attributes in the printing apparatus 102 and setting values (Options) related to the attribute information. As indicated by the information 401, function information (Features), such as sizes and media, and settable setting values (Options) for each function are acquired from the printing apparatus 102.

In information 402, "document-format-supported" indicates print data formats supported by the printing apparatus 102. In the example of the information 402, "application/octet-stream", "image/jpeg", "image/urf", and "image/pwg-raster" are specified as the data formats supported by the printing apparatus 102.

In information 403, "print-color-mode-supported" indicates color modes that can be designated in printing with the printing apparatus 102. In the example of the information 403, "color", "monochrome", and "auto" are specified as the color modes supported by the printing apparatus 102.

In information 404, "sides-supported" indicates that "Two-Sided-Short-Edge" (short-edge binding) and "Two-Sided-Long-Edge" (long-edge binding) are the two-sided printing supported by the printing apparatus 102.

In information 405, "printer-firmware-name" indicates that the name of firmware of the printing apparatus 102 is "Inkjet-AAA", and "printer-firmware-version" indicates that version information about the firmware is 1.090.

In information 406, "media-size-supported" indicates media sizes supported by the printing apparatus 102 as information expressing widths and heights in units of 1/100 mm. The example of the information 406 indicates that the printing apparatus 102 supports printing on A5-, A4-, and B5-sized sheets.

In information 407, "media-supported" indicates names of the media sizes supported by the printing apparatus 102.

In information 408, "media-type-supported" indicates media types supported by the printing apparatus 102. The example of the information 408 indicates that glossy (glossy standard), gold (glossy gold), mat (matte photographic paper), stationary (plain paper), photographic (photographic paper), and envelope (envelope) are supported.

In information 409, "media-source-supported" indicates a list of paper feed methods supported by the printing apparatus 102. The example of the information 409 indicates that auto (auto select), main (main tray), rear (rear tray), and disc (compact disk (CD)/digital versatile disk (DVD) tray) are the printing paper feed methods supported by the printing apparatus 102.

In information 410, "media-top(bottom/right/left)-margin-supported" indicates lengths of margins that are settable with respect to the top, bottom, right, and left of paper in printing with the printing apparatus 102. The attribute values described above as examples of the information 402 to the information 410 are merely examples, and actual attribute values can include attribute values other than the attribute values described above as examples. Further, the examples described in the information 401 are also mere examples, and an actual response acquired by issuing an IPP Get-Printer-Attributes operation to the printing apparatus 102 can include attribute information other than the attribute information described above as examples.

By issuing an IPP Get-Printer-Attributes operation to the printing apparatus 102, the print data generation software 202 acquires information, such as the information 401 described above, and generates the PDC 203 based on the acquired information.

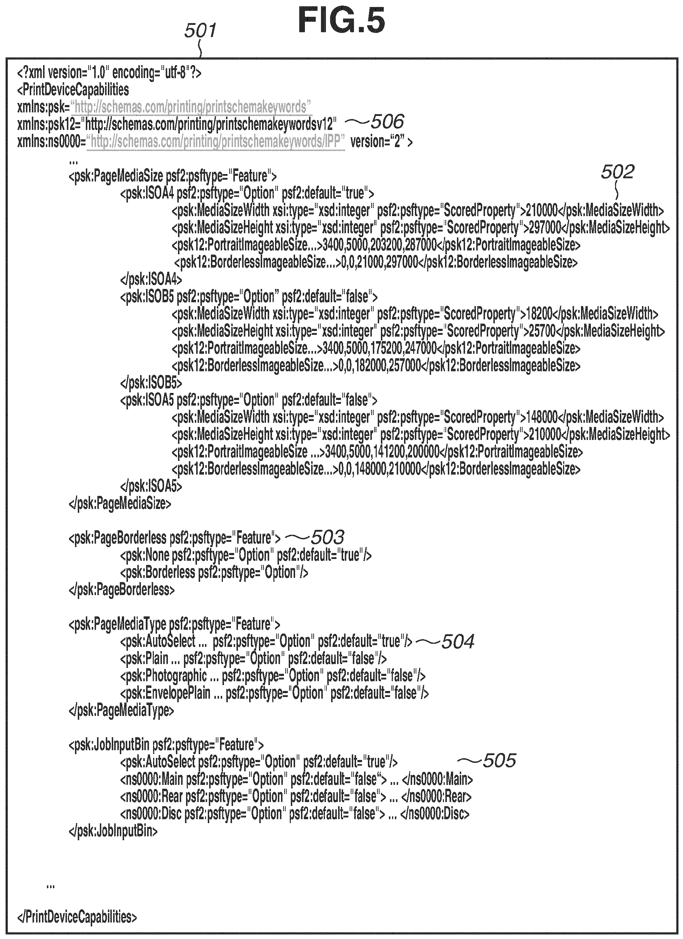

An example of the PDC 203 that the print data generation software 202 generates will be described with reference to information 501 illustrated in Fig. 5. Like the information 501 in Fig. 5, the PDC 203 is described in xml format, and attribute information (Features) indicating the functions that can be designated in the printing apparatus 102 and setting values (Options) related to the attribute information are described.

Information 506 indicates a text string defined as a prefix (Prefix) of a name space (NameSpace) to which Features and Options described in information 502 and information 504 described below belong.

Specifically, when the information 506 is defined as "xmlns:psk="http//schemas.com/printting/printingschemakeywords", adding "psk" as a prefix to a Feature or Option described in the information 502 or 503 described below makes it possible to define that the Feature or Option belongs to the NameSpace described above.

If the NameSpace is defined in an OS standard, it is possible to indicate that the Feature or Option belongs to the OS standard. As described above, the NameSpace represents a set or range to which the Feature or Option belongs. Further, the NameSpace is used to uniquely identify a Feature or Option when the print data generation software 202, the OS, or the extension application 204 refers to the PDC 203 or the PT/PC.

Further, the OS replaces a text string of a Feature or Option in displaying the Feature or Option on the print setting screen and displays the replaced text string. At this time, the NameSpace information is used to identify the Feature or Option that is the replacement target. Details thereof will be described below.

The information 502 indicates that the International Organization for Standardization (ISO) A4, ISO A5, and ISO B5 can be designated as a PageMediaSize (paper size). In this case, the PageMediaSize indicates a function (Feature), and the ISO A4 indicates a setting value (Option) of the function. For each function described below as well, a function (Feature) and a setting value (Option) are described using equivalent representations.

The information 503 indicates that Borderless (borderless) and None (with borders) are settable as a PageBorderless (borderless print setting).

The information 504 indicates that Plain (plain paper), Photographic (photographic paper), and EnvelopePlain (envelope paper) can be designated as PageMediaType (media).

Further, information 505 indicates that Main (main tray), Rear (rear tray), and Disc (CD/DVD tray) can be designated as a JobInputBin (paper feed method).

As described above, by issuing an IPP Get-Printer-Attributes operation to the printing apparatus 102, information, such as the information 401 described above, is acquired, and the PDC 203 is generated based on the acquired information. The PDC 203 generated at this time describes only the Features and Options that are known to the OS.

Specifically, information that is specific to the printing apparatus 102, such as media:glossy gold and matte photographic paper described in the information 408, is not described in the PDC 203, and only the media of the OS standard, such as plain paper and photographic paper, are described in the PDC 203. As described above, only the Features and Options of the OS standard among the information 401 acquired from the printing apparatus 102 are described in the PDC 203 generated by the print data generation software 202 or the OS.

The printing function extension unit 207 of the extension application 204 is capable of extending functions that can be used by the user in printing by editing the PDC 203 generated by the print data generation software 202 or the OS. Specifically, a function provided by the extension application 204 or a function that is supported by the printing apparatus 102, the latter function of which is not supported by the print data generation software 202, can be added by describing a new Feature and a new Option in the PDC 203.

According to the present embodiment, the printing function extension unit 207 uses the capability information 401 acquired from the printing apparatus 102 by the capability information acquisition unit 211 of the extension application 204 in extending a printing function.

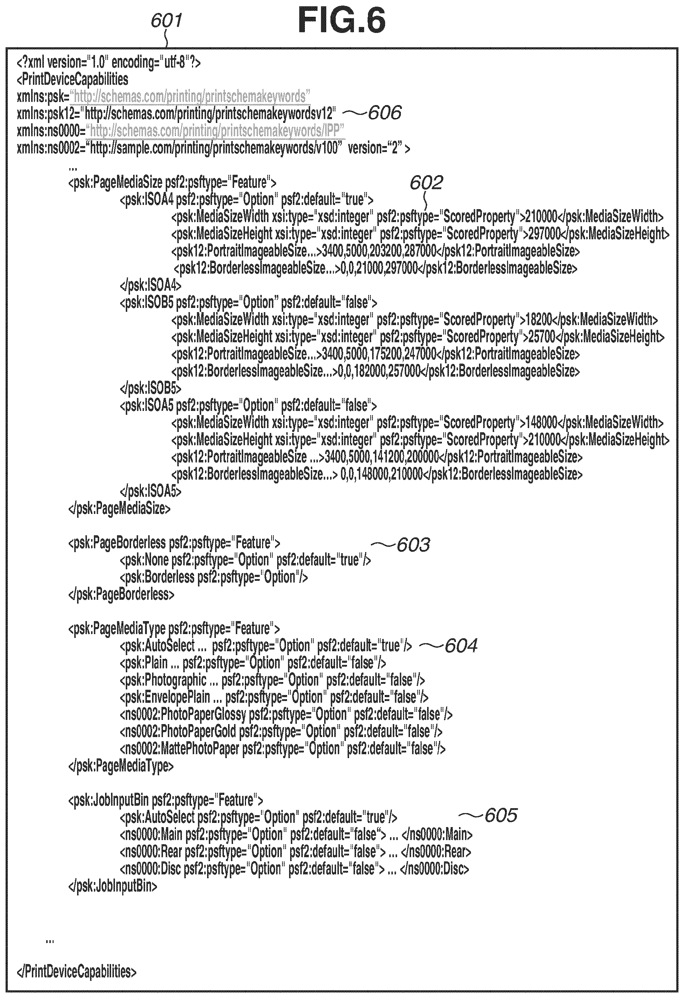

An example of the PDC 203 edited by the printing function extension unit 207 will be described with reference to information 601 illustrated in Fig. 6. An example where the printing function extension unit 207 performs a process of adding media as an editing process on the PDC 203 will be described. The information 601 is generated by adding Options to the information 504 by the printing function extension unit 207. The attributes of information indicated in information 602 to information 605 are similar to those in the information 502 to the information 505, so that redundant descriptions thereof are omitted.

The printing function extension unit 207 adds, to the PDC 203, capability information (information about functions specific to the printing apparatus 102) that is not described in the PDC 203 in the example of the information 501 among the capability information 401 acquired from the printing apparatus 102 by the capability information acquisition unit 211. Specifically, the information 604 indicates that media specific to the printing apparatus 102, such as PhotoPaperGlossy (glossy standard), are added to the PageMediaType by the printing function extension unit 207.

Further, when the printing function extension unit 207 is to add a Feature or Option to the PDC 203, a new NameSpace to which the Feature or Option belongs needs to be defined.

In the example of the information 601, information 606 indicates that the new NameSpace "http://sample.com/printing/printingschemakeywards/v100" is defined with the prefix "ns0002".

Further, in the information 604, the prefix "ns0002" is added to the added media to indicate that the media belong to the NameSpace identified by "ns0002".

The NameSpace identified by "ns0002" is specific to the vendor of the printing apparatus 102, and this information is considered to be acquired from the printing apparatus 102 or a server provided by the vendor.

As described above, the printing function extension unit 207 edits the PDC 203 based on the information acquired from the printing apparatus 102 by the capability information acquisition unit 211. This makes it possible to add a function provided by the extension application 204 or a function that is supported by the printing apparatus 102, the latter function of which is not supported by the print data generation software 202.

The example of adding a function that is described above as an example of PDC editing by the printing function extension unit 207 is merely an example, and the printing function extension unit 207 can also perform other PDC editing, such as adding a function, deleting a function, or adding a mutually exclusive relationship between (restriction information) setting values of the printing function.

### <Example of Screen Displayed by Print Setting Screen Extension Unit>

The PT/PC will be described with reference to specific examples, prior to describing examples of the print setting screen display by the print setting screen extension unit 205.

The PC refers to the PrintCapabilities, is generated based on the content of the PDC 203 by the print data generation software 202, and describes settable print setting items related to the printing apparatus 102. Like the PDC 203, the PC is described in xml format, and Fig. 7 illustrates a specific example of the PC.

The PC in information 701 is generated by the print data generation software 202 based on the PDC 203 (information 501) generated by the print data generation software 202. Since the PC is generated based on the PDC 203, the content of the PC is similar to the PDC 203. Thus, the properties of the information 701 to information 706 are similar to the properties of the information 501 to the information 506, so that redundant descriptions thereof are omitted below.

The information 702 to the information 705 indicate that paper size, media type, paper feed method, and borderless printing are Features that can be set as the print settings related to the printing apparatus 102. Further, A4, B5, and A5 are specified as settable Options for the paper size. Further, auto select, plain paper, photographic paper, and envelope paper are specified as settable Options for the media type. Further, auto select, main tray, rear feed, and CD/DVD feed are specified as settable Options for the paper feed method. Further, on and off are specified as settable Options for the borderless printing.

The difference between the PDC 203 and PC 701 is that the DisplayName is described as an attribute value of a Feature or Option in the PC 701. The DisplayName is set by referring to the NameSpace defined in the attributes and extracting information corresponding to a display language setting of the logged-in user. The DisplayName indicates a term that is displayed on the print setting screen to refer to a Feature or Option and is replacement information set by the print data generation software 202 and used commonly by a plurality of printing apparatuses. As described above, the PC describes settable Features for the printing apparatus 102 and a list of Options of the Features.

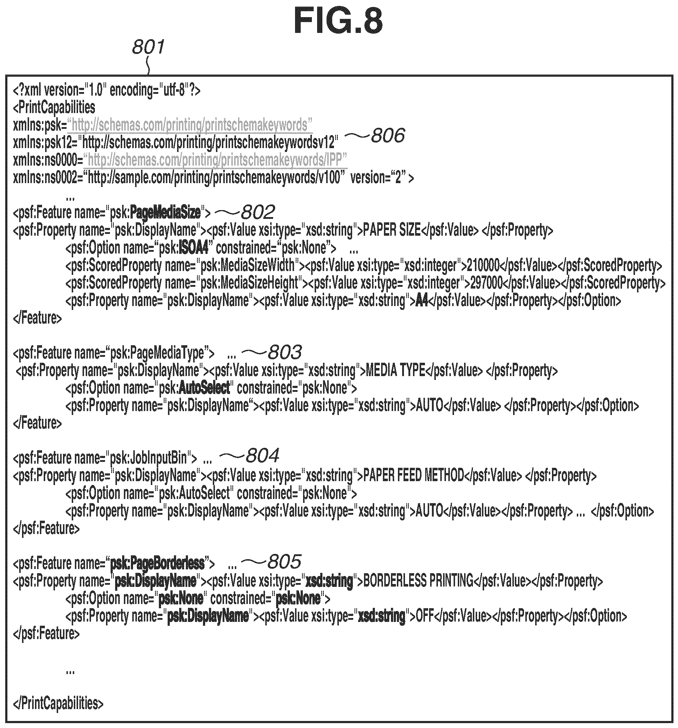

Further, the PT refers to PrintTicket and is data in xml format that is generated by the print data generation software 202 and indicates current print settings. Fig. 8 illustrates a specific example of the PT.

Information 801 is a PT generated by the print data generation software 202. The PT describes only the Options that are currently set for the Features described in the PC. For example, information 802 indicating a Feature of the paper size indicates that A4 is the currently-set paper size.

Similarly, information 803 to information 805 indicate that auto select, auto select, and off are currently set as the media type, the paper feed method, and the borderless printing, respectively. The properties of information 806 are similar to those of the information 506.

The current settings refer to either default print settings set at the time of connecting the print data generation software 202 to the printing apparatus 102 or print settings reflecting the values last changed by the user. As described above, the PT describes the current print settings.

Next, a process of displaying a print setting screen by the print setting screen extension unit 205 will be described with reference to a flowchart illustrated in Fig. 9. First, the process in the flowchart in Fig. 9 is started when the OS receives a print setting screen activation instruction from the user and activates the print setting screen extension unit 205 of the extension application 204.

In step S901, the print setting screen extension unit 205 acquires the PT/PC from the OS. Then, in step S902, the print setting screen extension unit 205 determines items to be displayed on the print setting screen. At this time, the print setting screen extension unit 205 determines Features and Options to be displayed on a print setting screen 1001 illustrated in Figs. 10A to 10C. The print setting screen extension unit 205 determines the Features and Options that are described in the PC as items to be displayed on the print setting screen.

Further, items that are not described in the PC can be displayed on the print setting screen. For example, a setting that does not relate to the capability information about the printing apparatus 102, the setting of which relates to the generation of print data, can be determined as a display item.

In step S903, after determining the items to be displayed on the print setting screen in step S902, the print setting screen extension unit 205 acquires the current print settings from the PT. The acquired current print settings are referred to so that the print setting screen will be displayed with the currently-set Options being selected for the Features.

Then, in step S904, the print setting screen extension unit 205 determines whether the PDR 212 described below includes replacement information for the Features and Options that are determined to be displayed on the print setting screen.

If the PDR 212 is determined to include replacement information related to the display items (YES in step S904), the processing proceeds to step S905. In step S905, the print setting screen extension unit 205 acquires the replacement information from the PDR 212 and determines a name for each item to be displayed on the print setting screen.

On the other hand, if the PDR 203 is determined to include no replacement information related to the display items (NO in step S904), the processing proceeds to step S906. In step S906, the print setting screen extension unit 205 acquires the DisplayName of each Feature or Option described in the PC and determines a name for each item to be displayed on the print setting screen.

In step S907, after determining the names of the display items in step S905 or S906, the print setting screen extension unit 205 generates a print setting screen. At this time, a GUI via which the user can perform operations to change the print settings, such as the screen 1001 (Figs. 10A to 10C), is generated. Details thereof will be described below.

After the print setting screen is generated in step S907, the processing proceeds to step S908, and in step S908, the print setting screen extension unit 205 instructs the display unit 119 connected to the host computer 101 to display the print setting screen generated in step S907. By performing the foregoing process, the print setting screen extension unit 205 causes the display unit 119 connected to the host computer 101 to display the print setting screen when a print setting screen activation instruction is received from the OS.

Next, the print setting screen displayed by the print setting screen extension unit 205 will be described with reference to Figs. 10A to 10C. The PC is generated based on the PDC 203 edited by the printing function extension unit 207. The print setting screen 1001 in Fig. 10A is an example of a screen that is displayed based on the generated PC by the print setting screen extension unit 205. The screens illustrated in Figs. 10A to 10C are merely examples and are not based on the PC 701 and the PT 801 described above.

A control 1002 is a control item via which a type of paper for use in printing is settable. For example, the items defined in the information 604 (such as AutoSelect (auto select), Plain (plain paper), PhotoPaperGold (glossy gold), and MattePhotoPaper (matte photographic paper)) are settable.

A control 1003 is a control item via which a size of paper for use in printing is settable. For example, the items defined in the information 602, such as A4, B5, and A5, are settable. A list 1010 in Fig. 10B illustrates a display state of the control 1003 being expanded, and the user can select a paper size from the expanded list.

A control 1004 is a control item via which a printing paper feed method for the printing apparatus 102 is settable. For example, the items defined in the information 605 (AutoSelect (auto select), Main (main tray), Rear (rear feed), Disc (CD/DVD feed)) are settable. A list 1011 in Fig. 10C illustrates a display state of the control 1004 being expanded, and the user can select a paper feed method from the expanded list.

A control 1005 is a control item via which a print orientation is settable, and either portrait or landscape can be set. A control 1006 is a control item via which a two-sided printing can be enabled or disabled. A control 1007 is a control item via which a binding direction in two-sided printing is settable, and examples of settable items are long-edge binding and short-edge binding. A control 1009 is a cancel button to close the screen without reflecting the settings. A control 1008 is an OK button to reflect the settings and close the screen.

The screens illustrated in Figs. 10A to 10C are merely examples, and a screen configuration via which other Features and Options are settable can be employed, or information other than the print settings can be displayed.

The terms that are displayed on the print setting screen to refer to the Features and Options of the Features are normally replaced based on a language set as a display language of the OS by the user logged into the OS. In the PC generation from the PDC 203 by the print data generation software 202, for the Features and Options that belong to the NameSpace of the OS standard, each DisplayName in the elements of the PC is generated based on a language of the display language setting. Since the terms for the Features and Options displayed on the print setting screen refer to the DisplayName in the PC, the terms that are replaced based on the language of the display language setting are displayed on the print setting screen.

However, the same does not apply to the text strings of specific Features or Options, and the text strings are replaced by referring to the printing-related language information (PDR) 212. The specific Features and Options correspond to the Features and Options that belong to a NameSpace that is not supported by the print data generation software 202 (that is not of the OS standard).

The PDR 212 is included in the configuration file of the print data generation software 202, and the print data generation software 202 dynamically generates the PDR 212 for each language of language packages installed in the OS. For example, when English, Japanese, and French language packages are installed in the OS, three PDRs 212 in total for replacing the specific text strings with English, Japanese, and French terms are generated.

Examples of the PDR 212 that the print data generation software 202 generates when English and Japanese language packages are installed in the OS will be described with reference to Figs. 11A and 11B.

Information 1101 and information 1102 are diagrams illustrating examples of the PDR 212 for replacing text strings of specific Options with English and Japanese text strings. Each PDR 212 is described in xml format as in the information 1101 and the information 1102 in Figs. 11A and 11B.

The PDR 212 can contain instructions to replace Feature or Option names described in name attributes in tag <data> elements with terms specified in <value> tags. The PDR 212 describes each Feature/Option name with the NameSpace in order to uniquely identify the Feature/Option name.

The example of the information 1101 contains instructions to replace the text strings "Main", "Rear", and "Disc" defined as Options of the JobInputBin in the PDC 203 with "Main tray", "Rear feed", and "CD/DVD feed".

The example of the information 1102 contains instructions to replace the text strings "Main", "Rear", and "Disc" defined as Options of the JobInputBin in the PDC 203 with "MEINTOREI", "RIAFUIDO", and "CD/DVDFUIDO".

As described above, the PDR 212 contains descriptions that are instructions to replace Feature/Option names to be displayed on the print setting screen with desired terms. The information 1101 and the information 1102 are described as examples of a case where the specific Option is the setting value of the paper feed method. In reality, there are certainly cases where specific Features and Options other than the paper feed method and the setting value of the paper feed method are described in the PDR 212.

On the print setting screen, each text string of a specific Feature or Option is replaced based on the PDR corresponding to the specific language designated by the OS. The OS detects the description of replacement information for the specific Feature or Option in the PDR 212, replaces a text string of the specific Feature or Option that is to be displayed on the print setting screen based on the replacement information described in the PDR 212, and displays the replaced text string.

The specific language designated by the OS refers to a language that is set as a language to be displayed before the user logs in to the OS. Hereinafter, the language setting that is set as the display language by the user logged into the OS will be referred to as "display language setting", and the language setting that is set as the language to be displayed before the user logs in to the OS will be referred to as "pre-login language setting". The pre-login language setting is an example of first language information, and the display language setting is an example of second language information.

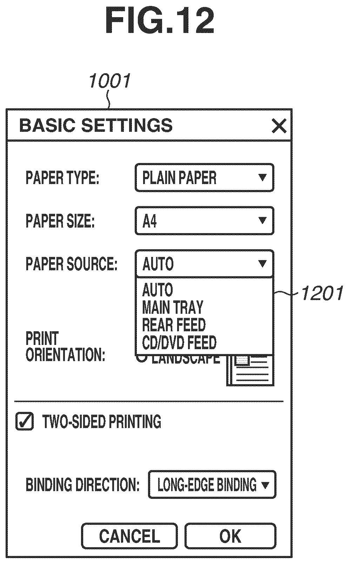

As described above, the text strings representing the Features and Options that are to be displayed on the print setting screen are replaced normally based on the display language setting. On the other hand, the specific Features and Options are replaced by referring to the PDR 212 (an example of the first replacement information) corresponding to the pre-login language setting. A phenomenon that occurs due to the mixing of a text string replaced based on the language of the display language setting and a text string replaced based on the language of the pre-login language setting on the same print setting screen will be described with reference to Figs. 11A, 11B, and 12.

A case where the display language setting and the pre-login language setting are respectively Japanese and English and the specific Option is an Option related to the paper feed method will be discussed. The print setting screen 1001 illustrated in Fig. 12 is an example of the print setting screen provided by the print setting screen extension unit 205.

In this case, since the pre-login language setting is English, the OS refers to the PDR 212 for English illustrated as the information 1101 in Fig. 11A as the PDR 212 for replacing the Options of the paper feed method.

The OS detects the description of replacement information related to the paper feed method in the PDR 212 for English, replaces the text strings of the Options related to the paper feed method with English text strings, and displays the English text strings on the print setting screen. Thus, a control 1201 displaying a paper feed method setting list on the print setting screen 1001 displays a list of the replaced setting values in English.

On the other hand, the OS refers to the DisplayName in each PC element as replacement information related to the Features and Options that are not described in the PDR 212 for English. Then, the OS replaces text strings related to the Features and Options other than the Options described above with Japanese text strings and displays the Japanese text strings on the print setting screen. The term "JIDO" in the paper feed method setting is not described in the PDR 212 for English illustrated as the information 1101 in Fig. 11A, so that the PC (Fig. 7) generated based on the display language setting is referred to, and the term "JIDO" is replaced with a Japanese term.

Normally, a language that is readable to the user logged into the OS is set as the display language setting, and a process for setting the display language setting is easy. On the contrary, a language of the OS installation media as an initial value is set as the pre-login language setting. To change the pre-login language setting, a right of an administrator of the OS is required, and a specialized process needs to be performed to change the setting value, so that the pre-login language setting is not a setting that is easy for the user to change. Furthermore, the pre-login language setting may be a language unreadable to the user.

As described above, the mixing of a text string replaced based on the display language setting and a text string replaced based on the pre-login language setting on the same print setting screen can cause an issue that a setting value replaced with a language unreadable to the user is displayed.

Thus, according to the present embodiment for solving the issue of the present application, the printing function extension unit 207 performs PDR editing as described below.

### < <Example of PDR Editing by Printing Function Extension Unit> >

The printing function extension unit 207 is activated at a specific timing by the OS so that the printing function extension unit 207 can edit the PDC and the PDR. Examples of the specific timing include the timing of associating the extension application 204 for the first time and the timing of opening the print setting screen by the print setting screen extension unit 205. The foregoing timings are merely examples, and in reality, the OS can activate the printing function extension unit 207 at any other timing.

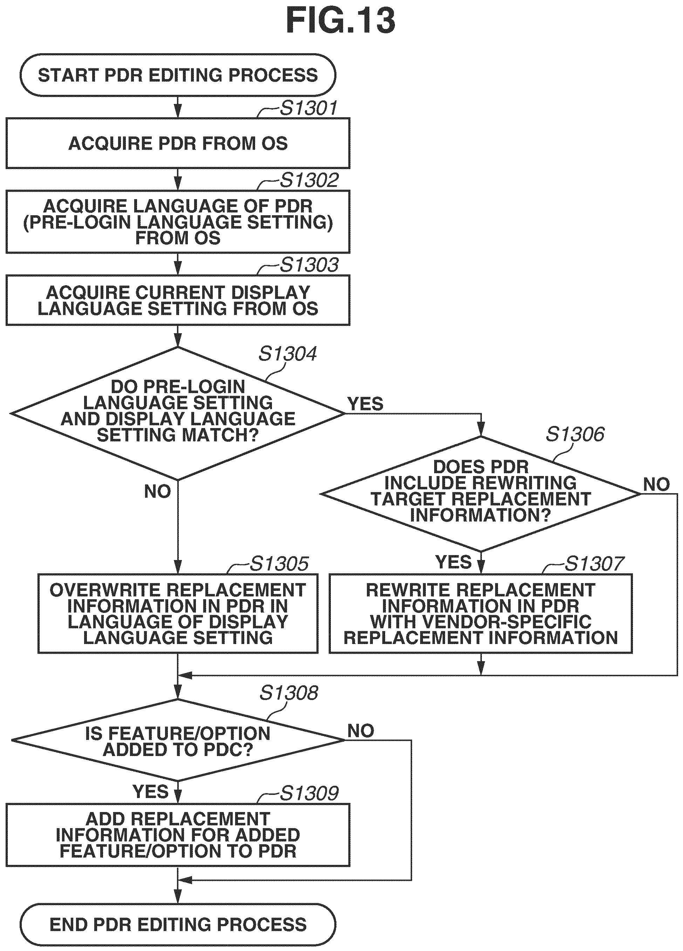

An example of a process of PDR editing that the printing function extension unit 207 activated at a specific timing by the OS performs will be described with reference to Fig. 13. Fig. 13 illustrates a flowchart illustrating a PDR editing process that is performed immediately after the printing function extension unit 207 is activated by the OS and performs PDC editing. The PDC editing process is performed by the printing function extension unit 207 to edit the PDC 203 to obtain the PDC illustrated as the information 601.

In step S1301, the printing function extension unit 207 acquires the PDR 212 that is currently referred to by the OS using the API (Get-Current-PrintDeviceResources) of the OS. The PDR 212 that the printing function extension unit 207 acquires in step S1301 is the single PDR 212 for the language set as the pre-login language setting of the OS.

For example, when English is set as the pre-login language setting of the OS, the PDR 212 that the printing function extension unit 207 acquires in step S1301 is the PDR 212 for English.

Next, in step S1302, the printing function extension unit 207 acquires the language of the PDR 212 that is currently referred to by the OS. The language of the PDR 212 that is currently referred to by the OS is information that is passed to the printing function extension unit 207 together with a printing function extension instruction issued to the printing function extension unit 207 by the OS. The language that is referred to by the OS herein is the language set as the pre-login language setting of the OS, and when the language is, for example, English, a value, such as "EN-US", is used to represent the language.

Next, in step S1303, the printing function extension unit 207 acquires the language set as the display language setting of the OS using the API of the OS. The display language setting to acquire can be a language setting that can be acquired using the API of the OS. Furthermore, a property (Windows.System.UserProfile.GlobalizationPreferences.Languages) of the OS that can be referred to from the extension application 204 can be acquired. When the language of the display language setting that is acquired as a property is, for example, Japanese, a value, such as "ja-JP", is used to represent the language. Steps S1301 to S1303 are an example of acquisition, and the printing function extension unit 207 is an example of an acquisition unit.

Then, the processing proceeds to step S 1304. In step S 1304, the printing function extension unit 207 determines whether the pre-login language setting acquired in step S1302 matches the display language setting acquired in step S1303.

If the printing function extension unit 207 determines that the pre-login language setting and the display language setting do not match (NO in step S1304), such as when the pre-login language setting is English while the display language setting is Japanese, the processing proceeds to step S1305. Step S1304 is an example of determination, and the printing function extension unit 207 is an example of a determination unit.

In step S1305, the printing function extension unit 207 overwrites the replacement information in the PDR 212 in the language set as the display language setting (this is an example of processing, and the printing function extension unit 207 is an example of a processing unit).

A case where the pre-login language setting is English while the display language setting is Japanese will be discussed. In this case, the PDR 212 that can be acquired in step S1301 is described to replace the names of the specific Features and Options in English, such as the information 1101 in Fig. 11A illustrated as an example of the PDR 212. However, since the display language setting is Japanese, the language to replace the PDR 212 is desirably Japanese.

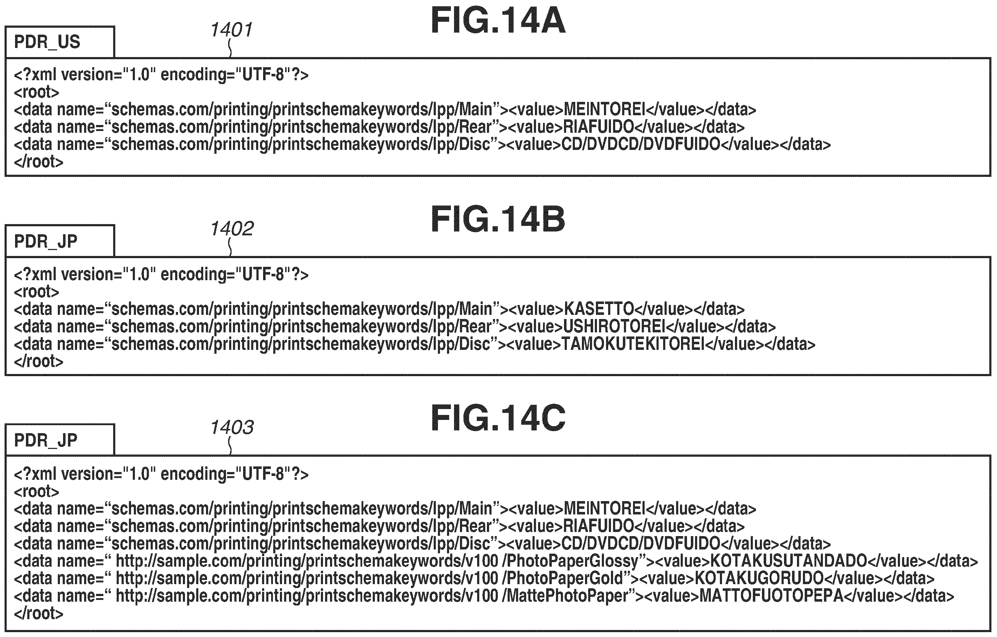

Thus, the printing function extension unit 207 overwrites the content of the PDR 212 to replace the Feature/Option names described in the PDR 212 acquired in step S1301 in Japanese. Fig. 14A illustrates information 1401 (an example of second replacement information) as an example of the PDR 212 edited by the printing function extension unit 207 in step S1305.

The information 1401 is described to replace "Main", "Rear", and "CD/DVD" described as the Options of the paper feed method in the PDC with the terms "MEINTOREI", "RIAFUIDO", and "CD/DVDFUIDO". Even when the PDR 203 for the replacement in English, such as the information 1401, is used, describing the <value> attributes in the <data> elements in Japanese causes the Feature/Option names to be displayed in Japanese.

The replacement information that the printing function extension unit 207 writes to the PDR 212 in step S1305 can be replacement information for use commonly by a plurality of printing apparatuses (replacement information corresponding to the DisplayName described in the PC). Further, the replacement information can be replacement information specific to the printing apparatus 102. Further, the replacement information that the printing function extension unit 207 writes to the PDR 212 in step S1305 can be stored in advance in the shared information 210 or acquired using any other method.

The PDR editing in step S1305 solves the issue that some of the Feature/Option names on the print setting screen can be replaced in a language (pre-login language setting (English)) different from the display language setting (Japanese) as in the example illustrated in Fig. 12. After the printing function extension unit 207 ends the processing in step S1305, the processing proceeds to step S1308.

When the printing function extension unit 207 determines that the pre-login language setting and the display language setting match (YES in step S1304), the processing proceeds to step S1306.

A case where the pre-login language setting and the display language setting are both set to Japanese will be discussed. In this case, the PDR before the editing by the printing function extension unit 207 is the PDR 203 (an example of first replacement information) illustrated as the information 1102 in Fig. 11B as an example.

The printing function extension unit 207 determines, over all the replacement information in the PDR 203, whether there is replacement information that is a rewriting target. The replacement information that is a rewriting target refers to replacement information related to Features and Options that are desirably replaced with terms specific to the printing apparatus 102 on the print setting screen. The Features and Options that are desirably replaced with the terms specific to the printing apparatus 102 will be described below.

In step S1306, the printing function extension unit 207 determines whether the replacement information list described in the PDR 212 and the rewriting target replacement information list stored in the shared information 210 include matching replacement information. If the printing function extension unit 207 determines that a target is included (YES in step S1306), the processing proceeds to step S1307. The rewriting target replacement information list can be stored as a list in the shared information 210 or acquired by any other method.

In step S1307, the printing function extension unit 207 replaces the replacement information in the PDR 212 that is determined to be a rewriting target in step S1306 with the replacement information specific to the printing apparatus 102 that is held in the extension application 204 (an example of processing). Specifically, the PDR editing in step S1307 is a process of replacing a generic term with a term specific to the printing apparatus 102.

The PDR 212 is to be generated by the print data generation software 202, and terms described as replacement information about Features and Options in the PDR 212 are limited to terms that are generic and independent of the model of the connected printing apparatus 102. While "Main" as an Option of the paper feed method is defined as an identical IPP attribute, different names are often used in different printing apparatuses. For example, there may be a case where a paper feed method with an IPP attribute indicating Main is referred to as "main body tray" in one printing apparatus but as "cassette" in another printing apparatus.

According to the information 1102 in Fig. 11B, the term "Main" of the paper feed method is replaced with "MEINTOREI" (main tray) and displayed as "MEINTOREI" (main tray) on the print setting screen. However, there may be a case where the term "cassette" is used to refer to "Main" of the paper feed method in the main body of the printing apparatus 102 and web manuals, which confuses the user configuring the print settings.

As described above, a Feature or Option represented by an identical IPP attribute may be referred to by different terms depending on the vendor or the printing apparatus. In order to resolve the inconsistencies, the printing function extension unit 207 replaces the replacement information in the PDR 212 that is determined to be a rewriting target in step S1306 with the replacement information specific to the printing apparatus 102 that is held in the extension application 204.

Fig. 14B illustrates information 1402 (an example of third replacement information) as a result of the PDR editing by the printing function extension unit 207 in step S1307.

The information 1102 (Fig. 11B) before the editing is described to replace "Main", "Rear", and "CD/DVD" of the paper feed method with "MEINTOREI" (main tray), "RIAFUIDO" (rear feed), and "CD/DVDFUIDO" (CD/DVD feed). On the other hand, the information 1402 obtained by editing the PDR by the printing function extension unit 207 is described to replace them with "KASETTO" (cassette), "USHIROTOREI" (rear tray), and "TAMOKUTEKITOREI" (multipurpose tray). The replacement information that the printing function extension unit 207 writes to the PDR 212 in step S1307 can be stored in advance in the shared information 210 or acquired by any other method.

As described above, the PDR editing in step S1307 makes it possible to replace a term of a Feature or Option that is to be displayed on the print setting screen as a generic term with a term specific to the vendor or the connected printing apparatus 102. After the printing function extension unit 207 ends the processing in step S1307, the processing proceeds to step S1308. Further, if the printing function extension unit 207 determines that no replacement information that is a rewriting target is included (NO in step S1306), the processing proceeds to step S1308.

In step S1308, the printing function extension unit 207 determines whether a Feature or Option specific to the printing apparatus 102 is added to the PDC 203 in step S301 in Fig. 3. If the printing function extension unit 207 determines that there is an added Feature or Option (YES in step S1308), the processing proceeds to step S1309. If the printing function extension unit 207 determines that there is no added Feature or Option (NO in step S1308), the PDR editing process is ended.

In step S1309, the printing function extension unit 207 edits the PDR 212 to replace the text string of the Feature or Option added to the PDC 203 in the language of the display language setting acquired in step S1303. A case where the pre-login language setting and the display language setting are both set to Japanese and the PDC illustrated as the information 601 in Fig. 6 is obtained as a result of editing the PDC 203 by the printing function extension unit 207 will be discussed.

In this case, PhotoPaperGlossy, PhotoPaperGold, and MattePhotoPaper are added as media specific to the printing apparatus 102 to the PDC 203. Further, the PDR 212 before the PDR editing by the printing function extension unit 207 is the PDR illustrated as the information 1102 in Fig. 11B.

Information 1403 in Fig. 14C illustrates an example of the edited PDR 212 obtained as a result of the PDR editing by the printing function extension unit 207 in step S1309 in the foregoing case. The information 1403 includes an additional description to replace "PhotoPaperGlossy", which is an Option added to the PDC 203, with "KOTAKUSUTANDADO" (glossy standard). Further, additional descriptions to replace "PhotoPaperGold" with "KOTAKUGORUDO" (glossy gold) and "MattePhotoPaper" with "MATTOFUOTOPEPA" (matte photographic paper) are also included.

For the Features and Options added to the PDC 203 by the printing function extension unit 207, the terms described in the PDC 203 are set as the DisplayName attributes of the PC regardless of the languages of the pre-login language setting and the display language setting. Thus, when no replacement information is added to the PDR 212 for the Features and Options added to the PDC 203, the text strings described in the PDC 203 are displayed on the print setting screen.

Thus, in step S1309, the printing function extension unit 207 adds, to the PDR 212, replacement information related to the language of the display language setting for each Feature or Option added to the PDC 203. This prevents the text strings of the Features and Options added to the PDC 203 by the printing function extension unit 207 from being displayed on the print setting screen without being replaced.

The replacement information that the printing function extension unit 207 writes to the PDR 212 in step S1309 can be replacement information related to the language set in the display language setting of the OS or replacement information specific to the printing apparatus 102. Further, the replacement information that the printing function extension unit 207 writes to the PDR 212 in step S1309 can be stored in advance in the shared information 210 or acquired by any other method.

As described above, according to the first embodiment, the printing function extension unit 207 of the extension application 204 edits the PDR 212 based on the display language setting.

The foregoing configuration makes it possible to solve the issue that some of the Feature/Option names are displayed in a plurality of languages on the print setting screen. Further, a Feature or Option that is represented by an identical IPP attribute, the Feature or Option of which are referred to by different names depending on the vendor or the printing apparatus, is displayed distinctly on the print setting screen. Furthermore, the text strings of the Features and Options added to the PDC 203 by the printing function extension unit 207 are prevented from being displayed on the print setting screen without being replaced.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc^{™} (BD)), a flash memory device, a memory card.

While the present invention has been described with reference to embodiments, it is to be understood that the invention is not limited to the disclosed embodiments.

The following numbered clauses form part of the disclosure:
1. A non-transitory computer-readable storage medium storing an application program, which when executed by one or more processors of an information processing apparatus, causing the information processing apparatus to perform a control method, the information processing apparatus being connected to a printing apparatus, the application program causing a display of the information processing apparatus to display a print setting screen corresponding to the printing apparatus, the control method comprising:
   acquiring first language information, second language information, and first replacement information corresponding to the first language information and including information about a term to be displayed on the print setting screen;
   determining whether the acquired first language information and the acquired second language information match; and
   processing the first replacement information,
   wherein in a case where it is determined that the first language information and the second language information differ from each other, the first replacement information is processed into second replacement information corresponding to the second language information.
2. The non-transitory computer-readable storage medium according to clause 1,
   wherein the first language information is information about a language that is displayed before a login to the information processing apparatus, and
   wherein the second language information is information about a language that is set as a display language by a user of the information processing apparatus.
3. The non-transitory computer-readable storage medium according to clause 1 or 2, wherein in a case where it is determined that the first language information matches the second language information, the first replacement information is processed into third replacement information corresponding to the second language information and being replacement information specific to the printing apparatus.
4. The non-transitory computer-readable storage medium according to clause 1, wherein the second replacement information is replacement information for use commonly by a plurality of printing apparatuses.
5. The non-transitory computer-readable storage medium according to clause 1, wherein the second replacement information is replacement information specific to the printing apparatus.
6. The non-transitory computer-readable storage medium according to clause 1 or 2,
   wherein in a case where it is determined that the first language information and the second language information differ from each other, information about a function specific to the printing apparatus is added to the second replacement information in the processing, and
   wherein in a case where it is determined that the first language information and the second language information match, the information about the function specific to the printing apparatus is added to the first replacement information in the processing.
7. The non-transitory computer-readable storage medium according to clause 3, wherein information about a function specific to the printing apparatus is added to the third replacement information.
8. An information processing apparatus to which a printing apparatus is to be connected, the information processing apparatus comprising:
   display means for displaying a print setting screen for the printing apparatus;
   acquisition means for acquiring first language information, second language information, and first replacement information corresponding to the first language information and including information about a term to be displayed on the print setting screen;
   determination means for determining whether the first language information acquired by the acquisition means and the second language information acquired by the acquisition means match; and
   processing means for processing the first replacement information,
   wherein in a case where the determination means determines that the first language information and the second language information differ from each other, the processing means processes the first replacement information into second replacement information corresponding to the second language information.
9. The information processing apparatus according to clause 8,
   wherein the first language information is information about a language that is displayed before a login to the information processing apparatus, and
   wherein the second language information is information about a language that is set as a display language by a user of the information processing apparatus.
10. The information processing apparatus according to clause 8 or 9, wherein in a case where the determination means determines that the first language information matches the second language information, the processing means processes the first replacement information into third replacement information corresponding to the second language information and being replacement information specific to the printing apparatus.
11. The information processing apparatus according to clause 8, wherein the second replacement information is replacement information for use commonly by a plurality of printing apparatuses.
12. The information processing apparatus according to clause 8, wherein the second replacement information is replacement information specific to the printing apparatus.
13. The information processing apparatus according to clause 8 or 9,
   wherein in a case where the determination means determines that the first language information and the second language information differ from each other, the processing means adds information about a function specific to the printing apparatus to the second replacement information, and
   wherein in a case where the determination means determines that the first language information and the second language information match, the processing means adds the information about the function specific to the printing apparatus to the first replacement information.
14. The information processing apparatus according to clause 10, wherein information about a function specific to the printing apparatus is added to the third replacement information.

## Claims

1. A method (1300) of controlling an information processing apparatus, the method comprising:
acquiring (1302, 1303) first language information, second language information, and first replacement information corresponding to the first language information and including information about a term to be displayed on a print setting screen of a printing apparatus;
determining (1304) whether the acquired first language information and the acquired second language information match; and
processing (1305) the first replacement information,
wherein based on determining that the first language information and the second language information differ from each other, the first replacement information is processed into second replacement information corresponding to the second language information.

2. The method (1300) of claim 1,
wherein the first language information is a language setting associated with a language that is displayed before a login to the information processing apparatus, and
wherein the second language information is a language setting associated with a language that is set as a display language by a user of the information processing apparatus.

3. The method (1300) of claim 1 or 2, wherein based on determining (1304) that the first language information matches the second language information, the first replacement information is processed into third replacement information corresponding to the second language information and being replacement information specific to the printing apparatus.

4. The method (1300) of claim 1, wherein the second replacement information is replacement information for use commonly by a plurality of printing apparatuses.

5. The method (1300) of claim 1, wherein the second replacement information is replacement information specific to the printing apparatus.

6. The method (1300) of claim 1 or 2,
wherein based on determining (1304) that the first language information and the second language information differ from each other, information about a function specific to the printing apparatus is added to the second replacement information in the processing, and
wherein based on determining (1304) that the first language information and the second language information match, the information about the function specific to the printing apparatus is added to the first replacement information in the processing.

7. The method (1300) of claim 3, wherein information about a function specific to the printing apparatus is added to the third replacement information.

8. An information processing apparatus (101) configured to connect to a printing apparatus (102), the information processing apparatus (101) comprising:
display means (116) for displaying a print setting screen for the printing apparatus (102);
acquisition means for acquiring first language information, second language information, and first replacement information corresponding to the first language information and including information about a term to be displayed on the print setting screen;
determination means for determining whether the first language information acquired by the acquisition means and the second language information acquired by the acquisition means match; and
processing means (111) for processing the first replacement information,
wherein based on the determination means determining that the first language information and the second language information differ from each other, the processing means processes the first replacement information into second replacement information corresponding to the second language information.

9. The information processing apparatus (101) according to claim 8,
wherein the first language information is a language setting associated with a language that is displayed before a login to the information processing apparatus, and
wherein the second language information is a language setting associated with a language that is set as a display language by a user of the information processing apparatus.

10. The information processing apparatus (101) according to claim 8 or 9, wherein based on the determination means determining that the first language information matches the second language information, the processing means processes the first replacement information into third replacement information corresponding to the second language information and being replacement information specific to the printing apparatus.

11. The information processing apparatus (101) according to claim 8, wherein the second replacement information is replacement information for use commonly by a plurality of printing apparatuses.

12. The information processing apparatus (101) according to claim 8, wherein the second replacement information is replacement information specific to the printing apparatus.

13. The information processing apparatus (101) according to claim 8 or 9,
wherein based on the determination means determining that the first language information and the second language information differ from each other, the processing means adds information about a function specific to the printing apparatus to the second replacement information, and
wherein based on the determination means determining that the first language information and the second language information match, the processing means adds the information about the function specific to the printing apparatus to the first replacement information.

14. The information processing apparatus (101) according to claim 10, wherein information about a function specific to the printing apparatus is added to the third replacement information.

15. A computer program comprising instructions which, when the program is executed by an information processing apparatus, cause the information processing apparatus to perform the method (1300) according to any one of claims 1 to 7.
